Europäisches Patentamt

(19) European Patent Office

Office européen des brevets

(11) Publication number: **0 178 018**
**B1**

(12) **EUROPEAN PATENT SPECIFICATION**

(45) Date of publication of the patent specification:
06.09.89

(51) Int. Cl.⁴: **A01D 41/12**

(21) Application number: **85201582.5**

(22) Date of filing: **01.10.85**

(54) Leveling mechanism for combine cleaning apparatus.

(30) Priority: **11.10.84 US 659933**
**11.10.84 US 659934**

(43) Date of publication of application:
**16.04.86 Bulletin 86/16**

(45) Publication of the grant of the patent:
**06.09.89 Bulletin 89/36**

(84) Designated Contracting States:
**DE FR GB**

(56) References cited:
**DE-A- 3 200 327**
**US-A- 2 796 717**
**US-A- 2 801 511**
**US-A- 2 831 577**
**US-A- 2 871 646**
**US-A- 4 344 443**

(73) Proprietor: **FORD NEW HOLLAND, INC. (a Delaware corp.), 500 Diller Avenue, New Holland Pennsylvania 17557(US)**

(72) Inventor: **Hyman, Myles, 1405 carlton Drive, Lancaster, PA 17601(US)**
Inventor: **Sheehan, Ronald T., 2166 Coventry Road, Lancaster, PA 17601(US)**
Inventor: **Rowland-Hill, E. William, 1707 Marietta Avenue, Lancaster, PA 17601(US)**

(74) Representative: **Vandenbroucke, Alberic T.J., FORD NEW HOLLAND N.V. Leon Claeysstraat 3A, B-8210 Zedelgem(BE)**

## Description

The present invention relates generally to combine harvesters and, more particularly, to improvements in the cleaning apparatus of such harvesters to permit a fore-and-aft leveling thereof when the combine is operating under fore-and-aft inclined operating conditions. The present invention also relates to improvements in the cleaning apparatus of combine harvesters which permit a leveling thereof when the combine is operating under both transverse and fore-and-aft inclined operating conditions.

The operation of combine harvesters under non-horizontal conditions is less efficient than the operation of the combine on generally level ground because of the gravity induced movement of threshed grain in a downhill direction on the cleaning apparatus. This gravity induced movement creates an unbalanced loading of the cleaning mechanism and prevents a proper flow of air from a cleaning fan or series of fans through the threshed grain on the sieves to facilitate a removal of chaff and other debris. A lateral load unbalance shifts threshed grain to the side of the cleaning sieve and results in improper cleaning and higher grain losses. A fore-and-aft inclination of the sieves will result in the threshed grain being either retarded on the sieves or rushed toward the rearward end, which again results in improper cleaning action and/or high grain losses.

Attempts to maintain a combine cleaning apparatus in a horizontal orientation while the combine is operating under sidehill conditions can be found in US-A 3 731 470 and in US-A 4 344 443. The apparatus disclosed in the US-A 3 731 470 provides a leveling of the entire frame of the combine through the operation of hydraulic cylinders to maintain the cleaning apparatus in a generally horizontal orientation. Since the entire combine is maintained in a level orientation, it was necessary to modify the connection of the crop harvesting header to the combine to permit a proper gathering of the crop material to be harvested.

The apparatus disclosed in the US-A 4 344 443 provides for a leveling of the entire cleaning mechanism, including the fan, about a longitudinally extending pivot axis; however, this mechanism does not provide for fore-and-aft leveling of the cleaning apparatus. The utilization of this leveling mechanism requires the use of a more complex, and therefore more expensive, main frame and drive train components. This complexity makes the elimination of a leveling mechanism to provide a "stationary" cleaning apparatus for use on flat land operations impractical. Furthermore, the mechanism according to US-A 4 344 443 is expensive to manufacture, is cumbersome to operate, results in an unnecessary shifting of major structural components and does not produce an overall leveling of the grain pan and chaffer sieve.

An attempt to maintain a combine cleaning apparatus in a longitudinal, generally horizontal orientation while the combine harvester is operating under fore-and-aft inclined operating conditions, has been disclosed in US-A 2 831 577. A shaker shoe supporting the cleaning sieves, is mounted for pivotal movement around the transverse axis of a fan structure of which the housing also is pivotally movable in unison with the shaker shoe around said axis. The grain pan structure according to US-A 2 831 577 comprises driven conveyor means operable to convey threshed grain to the cleaning sieves and pivotally coupled to the shaker shoe to maintain the delivery end above the receiving end of the cleaning sieves. This results in a fairly complicated mounting and drive arrangement of the grain pan structure.

A four-way leveling mechanism for a combine cleaning apparatus is shown in US-A 2 587 918. A ball mounting enables the cleaning unit including sieves, a fan and a vibrating mechanism, to tilt in any direction to maintain said unit in a level condition. A weight or pendulum is provided to accomplish this four-way leveling. However, this approach of four-way leveling of a cleaning apparatus for combine harvesters is no longer practical for use on modern combine harvesters having much larger cleaning means. Another four-way leveling combine cleaning apparatus is principally disclosed in DE-A 3 200 327.

It is the object of the present invention to overcome the aforementioned disadvantages of the prior art and, more particularly, to provide a longitudinal leveling mechanism for the cleaning apparatus in a combine harvester which, at the same time, is efficient in operation on the one hand and yet is simple in design with only a minimal number of parts differing from the corresponding parts in a conventional combine and therefore relatively inexpensive to manufacture, on the other hand. It is also the object of a further development of the instant invention to provide a four-way leveling mechanism for the cleaning apparatus in a combine harvester which has the same general advantages in addition to the four-way leveling capability.

Starting from US-A 2 831 577, the combine harvester according to the instant invention has a mobile main frame and a cleaning mechanism supported thereby in flow communication with a threshing and separating mechanism to receive threshed grain therefrom and to clean debris from said threshed grain. Said cleaning mechanism comprises:

— shaker shoe means having first and second longitudinally spaced ends and operably mounted on the main frame for generally fore-and-aft reciprocating movement on the one hand and for pivotal movement about a generally transverse pivot axis on the other hand;

— drive means for effecting said reciprocating movement of the shaker shoe means for conveying threshed grain generally lengthwise thereof;

— sieve means mounted on the shaker shoe means for movement therewith and operable to permit the passage of cleaned grain therethrough as threshed grain is conveyed therealong;

— first position control means operable to effect selective movement of the shaker shoe means about said generally transverse pivot axis to maintain a fore-and-aft, generally level attitude of the shaker shoe means;

– fan means operable to blow air through the sieve means to facilitate the removal of debris from the threshed grain; and

– grain pan means positioned to receive threshed grain from the threshing and separating mechanism and to transfer said threshed grain to the sieve means;

The invention is characterized in that :

– the grain pan means are mounted on the shaker shoe means for fore-and-aft leveling adjustment in unison therewith and together with the sieve means supported thereon;

– the shaker shoe means are pivotally supported at or adjacent one of said ends by the main frame about said transverse pivot axis and

– the first position control means interconnect the main frame and the shaker shoe means at or adjacent the other end thereof to effect said fore-and-aft leveling adjustment of the shaker shoe means together with the grain pan means and the sieve means mounted thereon about said pivot axis positioned at or adjacent the one end of the shaker shoe means without effecting movement of the fan means relative to the main frame.

Preferably, the grain pan means and the sieve means are mounted on the shaker shoe means via the intermediary of a subframe; said subframe being supported on said shaker shoe means for pivotal movement around a generally longitudinal axis relative to said shaker shoe means. Further position control means are operatively associated with said subframe to pivotally move said subframe with the grain pan means and sieve means thereon about said generally longitudinal axis to permit maintaining a generally level attitude thereof in the transverse direction irrespective of the transverse attitude of the main frame.

Preferably, the instant invention provides a mechanism for leveling only the grain pan and the chaffer sieve, whereby the weight of the structural elements pivotally supported for movement is minimized permitting an improved leveling operation. The fan and supporting structural components are not pivotally supported for leveling movement. A lower sieve can be suspended from the main frame below the chaffer sieve without the leveling movement of the chaffer sieve affecting the movement of the lower sieve.

It is an advantage of this invention that the efficiency of operation of the combine cleaning mechanism is increased under hillside operating conditions. Also the grainlosses and return flows are diminished. Yet the invention also provides a leveling mechanism for a combine cleaning apparatus without requiring complex main frame structure and drive components. It is also a feature of the invention that the leveling cleaning mechanism easily and quickly can be replaced by a conventional cleaning mechanism to provide an inexpensive flat lands combine with a "stationary" cleaning mechanism. Alternatively, the combine harvester according to the instant invention also easily and quickly can be transformed into a flat lands combine with a "stationary" cleaning mechanism by the mere elimination of the actuators and the control apparatus.

In general, the instant invention provides a leveling mechanism for the cleaning apparatus of a combine harvester which is durable in construction, inexpensive of manufacture, carefree of maintenance, facile in assemblage, and simple and effective in use.

The advantages of this invention will become apparent upon consideration of the following detailed description of the invention, especially when taken in conjunction with the accompanying drawings wherein:

Fig. 1 is a side elevational view of a combine harvester incorporating the principles of the instant invention, portions of the side structure of the harvester being broken away to better show the invention;

Fig. 2 is an enlarged partial cross-sectional view of the cleaning apparatus seen in Fig. 1; the reciprocating movement of the cleaning apparatus being indicated by the phantom position of the lower cleaning sieve and the pivotal movement of the shaker shoe about a forwardly disposed transverse pivotal axis also being shown in phantom;

Fig. 3 is a partial cross-sectional end view of the cleaning apparatus shown in Fig. 2 and taken in the direction indicated by lines 3–3; the pivotal movement of a subframe mounting the grain pan and chaffer sieve about a longitudinally extending pivotal axis being shown in phantom; and

Fig. 4 is a schematic view depicting the hydraulic and electrical circuitry for pivotally moving the cleaning apparatus to obtain both fore-and-aft and laterally level orientations.

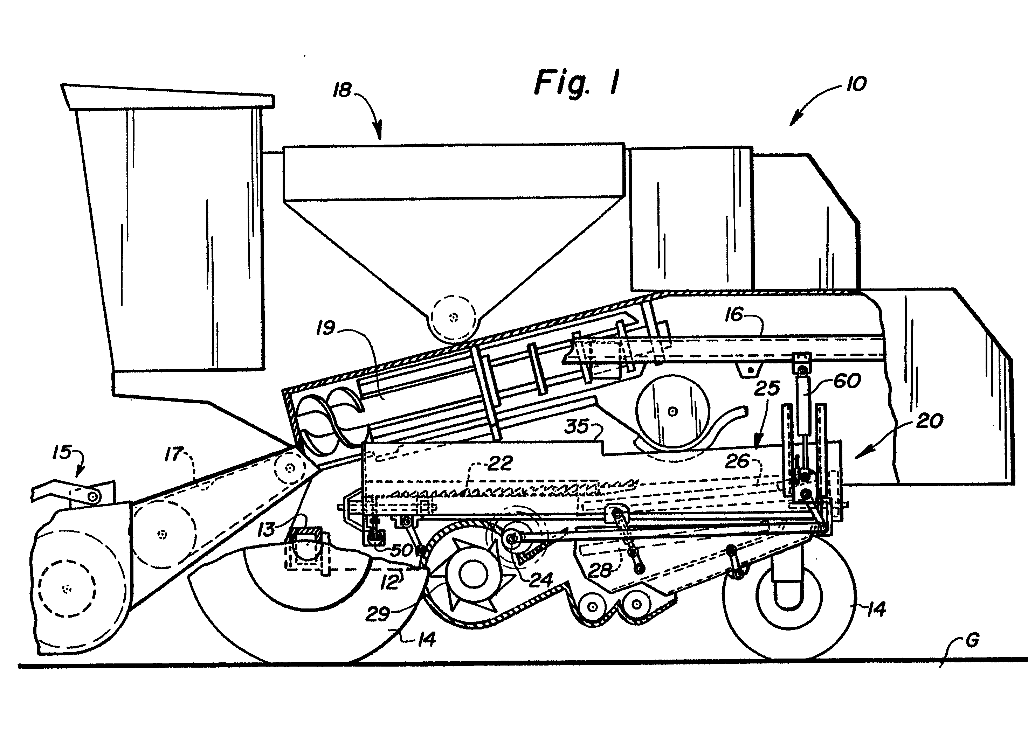

Referring now to the drawings and, particularly, to Fig. 1, a side elevational view of a combine harvester incorporating the principles of the instant invention, can be seen. Any left and right references are used as a matter of convenience and are determined with reference to the direction of forward operative travel. The combine 10 is provided with a main frame 12 having at least one transversely disposed beam 13 mobilely supported over the ground G by wheels 14. A crop harvesting header 15 is forwardly supported from the frame 12 to gather crop material and convey it rearwardly via a feeding mechanism 17 to a threshing and separating mechanism 19. The threshing and separating mechanism 19 is operable to thresh the crop material fed thereto and separate the threshed grain from the trash material by precipitating the threshed grain downwardly through the threshing and separating mechanism 19 while discharging the trash material along a separate path to be deposited on the ground G rearward of the combine 10.

A cleaning mechanism 20 is positioned beneath the threshing and separating mechanism 19 to receive the threshed grain precipitated therefrom on a grain pan 22. Generally, the cleaning mechanism 20 is operatively connected to an eccentric drive 24 to effect a generally fore-and-aft reciprocating movement of the cleaning mechanism 20 to convey the threshed grain in a rearward direction. Sieve means 25 are positioned rearwardly of the grain pan 22 to receive threshed grain conveyed rearwardly therefrom and clean the threshed grain from chaff and other debris conveyed therewith. Typically, the sieve means 25 include an upper chaffer sieve 26 and a lower cleaning sieve 28 mounted for opposing fore-and-aft reciprocating movement and in flow communication with air being blown from a fan 29 upwardly therethrough to remove chaff and debris from the threshed grain. It can be seen that, when in a normal horizontal orientation, the sieves 26, 28 have a slightly upward inclination in a rearward direction. Cleaned grain passing through the sieve means 25 is conveyed into a storage tank 18 supported on the main frame 12.

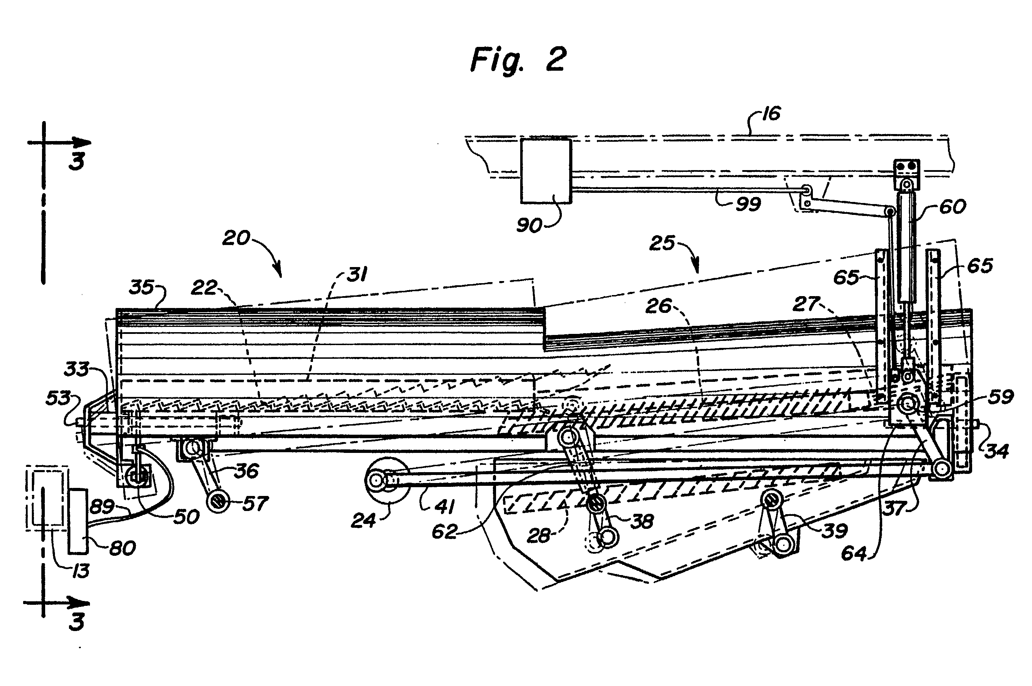

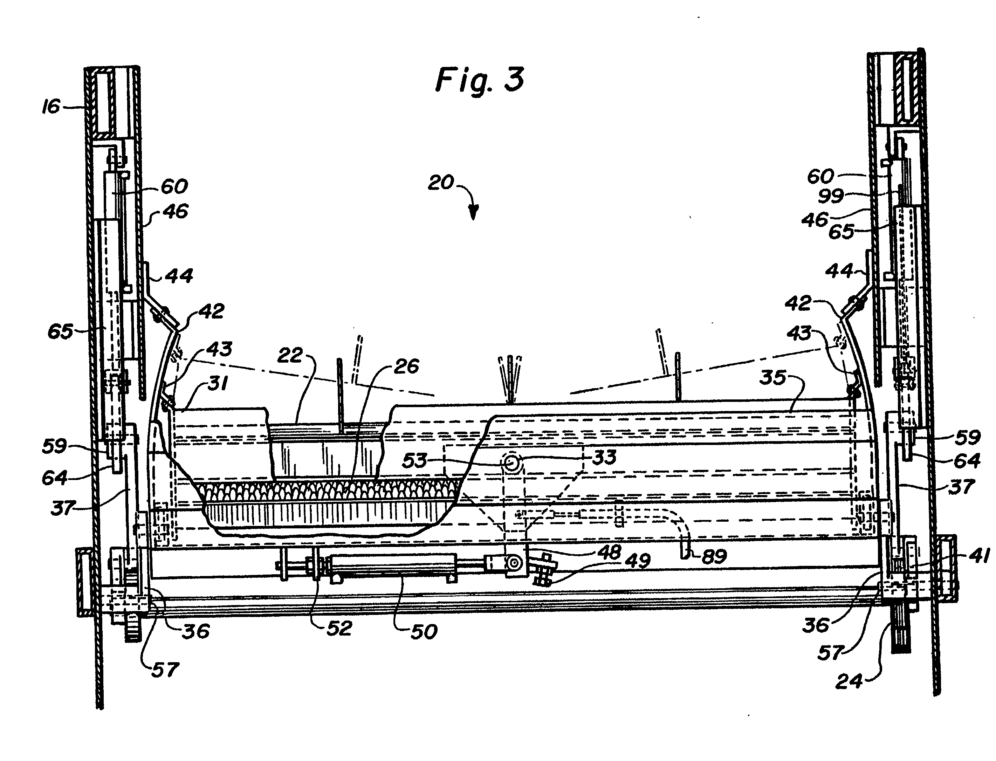

Referring now to Figs. 2 and 3, the details of the leveling mechanism can best be seen. The grain pan 22 and chaffer sieve 26 are mounted in a subframe 31 which in turn is pivotally supported by fore-and-aft extending and longitudinally spaced pivots 33, 34 within a shaker shoe 35. A tailings return section 27 is positioned at the rear of the chaffer sieve 26 and is pivotally movable therewith. The tailings return section 27 is cooperable with conventional apparatus for returning unthreshed heads to the threshing and separating means 19. The shaker shoe 35 is movably supported from the frame 12 by front connecting links 36, rearward connecting links 37, and central connecting links 38.

Each of the connecting links 36, 37, 38 incorporate rubber bushings in a conventional manner to permit a generally fore-and-aft reciprocating movement induced by drive arms 41 interconnecting the eccentric drive 24 and the rearward links 37 supporting the shaker shoe 35. The lower cleaning sieve 28 is supported from the frame 12 by the central connecting links 38 and supplemental connecting links 39 in a similar manner to permit a generally fore-and-aft reciprocating movement. By utilizing the center connecting links 38 with frame mounting points intermediate the connections between the shaker shoe 35 and the lower cleaning sieve 28, the shaker shoe 35 and lower sieve 28 are drivingly reciprocated in opposing fore-and-aft directions in a manner conventionally known by one skilled in the art.

The shaker shoe 35 is provided with inwardly directed arcuate side members 42 to permit a sealing cooperation with longitudinally extending seals 43 connected to the subframe 31 and sweepingly engaging the inside of said arcuate side members 42 during pivotal movement of the subframe 31 relative to the shaker shoe 35. Additional longitudinally extending seals 44 are connected to the side members 42 of the shaker shoe 35 to sealingly engage vertically extending sidewalls 46 of the combine 10 to prevent the loss of threshed grain between the shaker shoe 35 and the sidewalls 46.

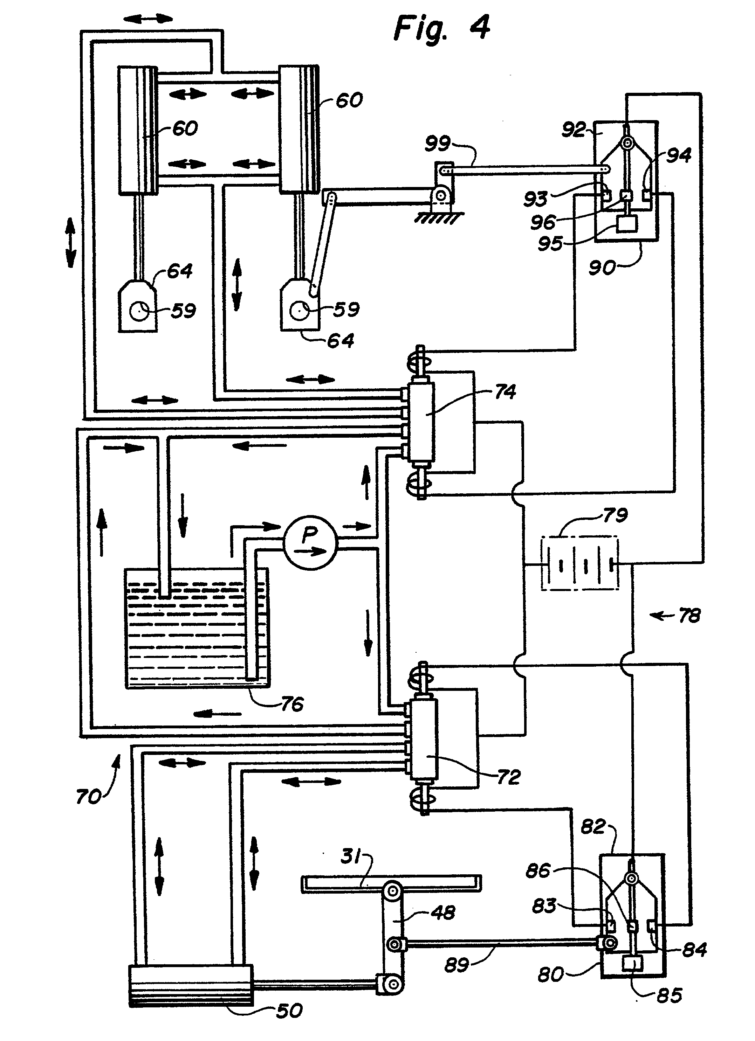

The subframe 31 is provided with a downwardly extending actuating arm 48. A hydraulic cylinder 50 interconnects a mounting tab 52 connected to the shaker shoe 35 and the actuating arm 48 for the pivotal movement of the subframe 35 about a fore-and-aft extending axis 53 defined by the front and back pivots 33, 34. An adjustable stop bolt 49 engageable with the shaker shoe 35 serves as a limit to the amount of pivotal movement permitted to the subframe 31 in one direction, while that the end of the retraction stroke of the cylinder 50 limits the movement of the subframe 31 in the opposing direction. The hydraulic cylinder 50 is operatively associated with a hydraulic system 70, described in greater detail with reference to Fig. 4 below, to provide a flow of hydraulic fluid under pressure for operation of the cylinder 50.

The shaker shoe 35 is also mounted for pivotal movement about a transversely extending axis 57 corresponding to the frame mounting points of the front connecting links 36. The frame mounting points 59 for the rearward connecting links 37 are movably supported from a pair of transversely spaced hydraulic cylinders 60 to effect a fore-and-aft leveling movement of the shaker shoe 35, and consequently also of the grain pan 22 and chaffer sieve 26, through a pivotal movement of the shaker shoe 35 about the forwardly disposed transverse pivot axis 57 by raising and lowering the rearward end of the shaker shoe 35. To accommodate the pivotal movement of the shaker shoe 35 about the transverse axis 57, the center connecting links 38 include telescoping portions 62, permitting a relative vertical movement between the chaffer sieve 26 and the lower cleaning sieve 28. To restrict any fore-and-aft movement of the frame mounting points 59 and thereby provide a proper fore-and-aft reciprocating movement induced by the eccentric drive 24, the frame mounting points 59 are housed in plates 64 positioned within generally vertically extending guides 65 to guide the movement of the plates 64.

Referring now to the schematic diagram of Fig. 4 and the cross-sectional views of Figs. 2 and 3, it can be seen that the hydraulic cylinders 50, 60 are operably associated with the hydraulic system 70. A first solenoid valve 72 controls the direction of hydraulic fluid flow to the hydraulic cylinder 50, while that a second solenoid valve 74 controls the flow of hydraulic fluid to the hydraulic cylinders 60. The solenoid valves 72, 74 can be positioned to direct fluid to the respective hydraulic cylinders for either extension or retraction thereof or to circulate fluid back to the reservoir 76 without effecting any movement of the hydraulic cylinders 50, 60. The positioning of the solenoid valves 72, 74 is controlled through an electrical circuit 78 connected to a battery 79 serving as a source of electrical power and to a pair of inclinometers 80, 90.

Each inclinometer 80, 90 includes a master member 82, 92 having a first electrical contact 83, 93 and a spaced apart second electrical contact 84, 94. A pendulum 85, 95 is pivotally mounted within the respective master member 82, 92 for movement with the force of gravity relative to the master member 82, 92. The pendulum 85, 95 carries a third electrical contact 86, 96 engageable with the respective first and second contacts to close the electrical circuit 78 and send a flow of electrical current from the battery 79 to the respective solenoid valve 72, 74 as described in greater detail below. The position of the master members 82, 92 relative to the main frame 12 is controlled through control links 89, 99 in a manner also further described below.

The lateral inclinometer 80 is mounted on a transversely extending beam 13 forming a part of the main frame 12. As the combine 10 encounters side hill operating conditions, the transverse beam 13 becomes inclined to the horizontal. However, the pendulum 85 follows the force of gravity and moves relative to the master member 82. Sufficient lateral inclination of the combine 10 will cause the third contact 86 to engage either the first or second contact 83, 84 to close the electrical circuit and to direct a flow of hydraulic fluid to the hydraulic cylinder 50, which in turn effects a pivotal movement of the subframe 31 relative to the shaker shoe 35 to move the subframe 31 toward a level orientation relative to the shaker shoe 45 and the main frame 12. The corresponding movement of the actuating arm 48 pulls on the control link 89 to cause a movement of the master member 82 relative to pendulum 85 until the electrical contact 86 on the pendulum 85 breaks engagement with the respective contact 83 or 84 on the master member 82. As a result, the solenoid valve 72 is permitted to return to a neutral position thereby locking the hydraulic cylinder 50 at the position to which it has been moved. Subsequent changes in the lateral inclination of the combine 10 results in a similar operation to effect a movement of the subframe 31 in one direction or another with the subframe 31 always seeking a level orientation.

The operation of the hydraulic system 70 to control the fore-and-aft leveling operation is similar to the lateral leveling operation described above. The longitudinal inclinometer 90 is mounted on a fore-and-aft extending frame member 16 to sense the inclination thereof in a manner similar to that described above for the lateral inclinometer. Movement of the pedulum 95 relative to the master member 92 is induced by the force of gravity and effects an engagement of the third contact member 96 with one of the first or second contacts 93, 94. The result is a closing of the electrical circuit 78 to energize the solenoid valve 74 and direct the flow of hydraulic fluid to the hydraulic cylinders 60 to cause a pivotal movement of the shaker shoe 35 about the transverse pivot axis 57. The movement of the plates 64 housing the rearward frame pivots 59 causes the control linkage 99 coupled to one of said plates 64 to move the master member 92 relative to the longitudinal frame member 16 and the pendulum 95 until the electrical circuit 78 is broken and the shaker shoe 35 has attained a generally horizontal fore-and-aft orientation. One skilled in the art will readily realize that operation of the fore-and-aft and lateral leveling mechanisms described above will result in a maintenance of the grain pan 22 and chaffer sieve 26 in a generally horizontal orientation in both the fore-and-aft and transverse directions irrespective of the actual orientation of the main frame 12 when the combine 10 is operating uphill, downhill or on sidehills in either direction. Further description of the construction and operation of part of the self-leveling cleaning mechanism subject of the present application can be found in copending EPC Patent Application No 852 015 817/0 178 017 entitled "Lateral Leveling Mechanism for Combine Cleaning Apparatus", the description of which is incorporated herein by reference.

While that the preferred structure in which the principles of the present invention have been incorporated, are shown and described above, it is to be understood that the invention is not to be limited to the particular details thus presented, but, in fact, widely different means may be employed in the practice of the broader aspects of this invention. The scope of the appended claims is intended to encompass obvious changes in the details, materials and the arrangement of parts which will occur to one of skill in the art upon a reading of this disclosure.

**Claims**

1. A combine harvester (10) having a mobile main frame (12) and a cleaning mechanism (20) supported thereby in flow communication with a threshing and separating mechanism (19) to receive threshed grain therefrom and to clean debris from said threshed grain; the cleaning mechanism (20) comprising:
   - shaker shoe means (35) having first and second longitudinally spaced ends and operably mounted on the main frame (12) for generally fore-and-aft reciprocating movement on the one hand and for pivotal movement about a generally transverse pivot axis (57) on the other hand;
   - drive means (24, 44) for effecting said reciprocating movement of the shaker shoe means (35) for conveying threshed grain generally lengthwise thereof;
   - sieve means (26) mounted on the shaker shoe means (35) for movement therewith and operable to permit the passage of cleaned grain therethrough as threshed grain is conveyed therealong;
   - first position control means (64, 60, 70, 90) operable to effect selective movement of the shaker shoe means (35) about said generally transverse pivot axis (57) to maintain a fore-and-aft, generally level attitude of the shaker shoe means (35);
   - fan means (29) operable to blow air through the sieve means (26) to facilitate the removal of debris from the threshed grain; and
   - grain pan means (22) positioned to receive threshed grain from the threshing and separating mechanism (19) and to transfer said threshed grain to the sieve means (26); characterized in that
   - the grain pan means (22) are mounted on the shaker shoe means (35) for fore-and-aft leveling adjustment in unison therewith and together with the sieve means (26) supported thereon;
   - the shaker shoe means (35) are pivotally supported at or adjacent one of said ends by the main frame (12) about said transverse pivot axis (57); and
   - the first position control means (64, 60, 70, 90) interconnect the main frame (12) and the shaker shoe means (35) at or adjacent the other end thereof to effect said fore-and-aft leveling adjustment of the shaker shoe means (35) together with the grain pan means (22) and the sieve means (26) mounted thereon about said pivot axis (57) positioned at or adjacent the one end of the shaker shoe means (35) without effecting movement of the fan means (29) relative to the main frame (12).

2. A combine harvester (10) according to claim 1 characterized in that the first position control means (64, 60, 70 90) comprise a first inclinometer (90) mounted on a portion (16) of the main frame (12) for sensing the fore-and-aft inclination thereof and first actuator means (60) operatively associated with the shaker shoe means (35) and the first inclinometer (90) for effecting a pivotal movement of the shaker shoe means (35) about said transverse pivot axis (57) in response to the sensing of a change in the fore-and-aft inclination of the main frame (12) by said first inclinometer (90) to maintain the shaker shoe means (35) in a fore-and-aft, generally level attitude.

3. A combine harvester (10) according to claim 1 or 2 characterized in that:
- the grain pan means (22) and sieve means (26) are mounted on the shaker shoe means (35) via the intermediary of a subframe (31); said subframe (31) being supported on said shaker shoe means (35) for pivotal movement around a generally longitudinal axis (53) relative to said shaker shoe means (35), and
- further position control means (50, 70, 80) are operatively associated with said subframe (31) to pivotally move said subframe (31) with the grain pan means (22) and sieve means (26) thereon about said generally longitudinal axis (53) to permit maintaining a generally level attitude thereof in the transverse direction irrespective of the transverse attitude of the main frame (12).

4. A combine harvester (10) according to claim 3 characterized in that the further position control means (50, 70, 80) comprise:
- a further inclinometer (80) mounted on a further portion (13) of the main frame (12) for sensing the transverse inclination thereof, and
- further actuator means (50) operatively associated with the subframe (31) and the further inclinometer (80) for effecting said pivotal movement of said subframe (31) with the grain pan means (22) and sieve means (26) thereon about said generally longitudinal axis (53) in response to the sensing of a change in the transverse inclination of the main frame (12) by said further inclinometer (80) to maintain the grain pan means (22) and sieve means (26) in said transverse, generally level attitude.

5. A combine harvester (10) according to claim 2 or 4 characterized in that:
- the or each inclinometer (90, 80) comprises first contact members (95, 96 resp. 85, 86) and second contact members (92, 93, 94 resp. 82, 83, 84) and
- the or each second contact member (92, 93, 94 resp. 82, 83, 84) is coupled to the shaker shoe means (35), respectively the subframe (31) by means of a link (99 resp. 89); the arrangement being such that:
- the or each first contact member (95, 96 resp. 85, 86) is movable in response to gravity forces to make contact with the or each corresponding second contact member (92, 93, 94 resp. 82, 83, 84) when the main frame (12) is inclined in the fore-and-aft direction, respectively the transverse direction to thereby cause:
    a) the first actuator means (60) to pivot the shaker shoe means (35) toward said fore-and-aft level attitude, respectively
    b) the further actuator means (50) to pivot the subframe (31) toward said transverse level attitude, and
- the pivotal movement of the shaker shoe means (35) respectively the subframe (31) subsequently causes, via the or each corresponding link (99 resp. 89), the or each corresponding second contact member (92, 93, 94 resp. 82, 83, 84) to move in the same direction as the or each corresponding first contact member (95, 96 resp. 85, 86) to thereby interrupt said contact between the or each first and second corresponding contact members (95, 96 and 92, 93, 94 resp. 85, 86 and 82, 83, 84) as said level attitude in the fore-and-aft direction, respectively in the transverse direction is reached.

6. A combine harvester (10) according to claim 5 characterized in that the or each second contact member (92, 93, 94 resp. 82, 83, 84) has first and second contacts (93, 83 resp. 94, 84) and the arrangement is such that the respective engagements between the or each first contact member (95, 96 resp. 85, 86) and the first and second contacts (93, 83 resp. 94, 84) of the or each corresponding second contact member (92, 93, 94 resp. 82, 83, 84) effect movement of the shaker shoe means (35) respectively the subframe (31) in opposing directions.

7. A combine harvester (10) according to claim 5 or 6 characterized in that:
- the first actuator means are formed by at least one hydraulic cylinder (60) which operatively interconnects the shaker shoe means (35) at or adjacent said other end thereof and the main frame (12), and
- the first position control means (64, 60, 70, 90) further also comprise an electro-hydraulic system (78, 70) having a solenoid valve (74) operatively interconnecting the first inclinometer (90) and the at least one hydraulic cylinder (60); said solenoid valve (74) being actuated upon the first contact member (95, 96) of the first inclinometer (90) contacting the second contact member (92, 93, 94) thereof as said inclinometer (90) senses a change in the fore-and-aft inclination of the main frame (12) to control the flow of hydraulic fluid to and from the at least one hydraulic cylinder (60).

8. A combine harvester (10) according to any of the claims 5 to 7 when appended to claim 4 characterized in that:
- the further actuator means are formed by a hydraulic cylinder (50) which operatively interconnects the shaker shoe means (35) and the subframe (31), and

— the further position control means (50, 70, 80) further also comprise an electro-hydraulic system (78, 70) having a solenoid valve (72) operatively interconnecting the second inclinometer (80) and said hydraulic cylinder (50); said solenoid valve (72) being actuated upon the first contact member (85, 86) of the second inclinometer (80) contacting the second contact member (92, 93, 94) thereof as said inclinometer (80) senses a change in the transverse inclination of the main frame (12) to control the flow of hydraulic fluid to and from said hydraulic cylinder (50).

9. A combine harvester (10) according to any of the preceding claims, characterized in that the shaker shoe means (35) are supported generally at one end on the main frame (12) by a pair of mounting links (36); each mounting link (36) having a connection end connected to the shaker shoe means (35) and a pivot end (57) spaced from the connecting end and coupled to the main frame (12), said pivot ends (57) defining the transverse pivot axis around which the shaker shoe means (35) are pivoted during the fore-and-aft leveling action and said pivot ends (57) further also permitting the shaker shoe means (35) to reciprocate along the generally fore-and-aft direction relative to the main frame (12).

10. A combine harvester (10) according to any one of the preceding claims, characterized in that:
- the shaker shoe means (35) are connected generally at the other end longitudinally spaced from the one end to a pair of connecting links (37); each connecting link (37) having a connection end connected to the shaker shoe means (35) and a pivot end (59) spaced from the connection end and said pivot ends (59) permitting the shaker shoe means (35) to reciprocate along the generally fore-and-aft direction relative to the main frame (12), and
- the first position control means (64, 60) for controlling the fore-and-aft leveling of the shaker shoe means (35) are connected to said pivot ends (59) of the connecting links (37) to produce a generally vertical movement of said other end of the shaker shoe means (35) relative to the transverse pivot axis (57) to effect said fore-and-aft leveling of the shaker shoe means (35).

11. A combine harvester (10) according to claim 10, characterized in that the drive means (24, 41) are in the form of eccentric drive means (24) connected to the connection end of at least one of said connecting links (37) to provide a generally fore-and-aft shaking motion to the shaker shoe means (35); said shaking motion having a vertical component.

12. A combine harvester (10) according to claim 10 or 11, characterized in that each connecting link (37) is pivotally connected at its pivot end (59) to a plate (64) which is generally vertically movable in guide members (65) mounted on the main frame (12) and the first position control means (60) controlling the fore-and-aft leveling operation are operably connected to said plates (64) for moving said plates (64) along said guide members (65) to accomplish raid generally fore-and-aft leveling action of the shaker shoe means (35) around the transverse pivot axis (57).

13. A combine harvester (10) according to any of the preceding claims, wherein further sieve means (28) are positioned below the first sieve means (26) to receive cleaned grain therefrom and subject said cleaned grain to a further cleaning action; said further sieve means (28) being suspended from the main frame (12) by two sets of connecting links (38, 39) with each one of said connecting links (38, 39) having a connection end connected to the further sieve means (28) and a pivot connected to the main frame (12) and with the connecting links (38) of one set of connecting links also being connected to the shaker shoe means (35) on the opposing sides of the pivotal connections thereof to the main frame (12) to provide a generally fore-and-aft reciprocating movement to the further sieve means (28) in opposition to the movement of the first sieve means (26), and which is characterized in that: the one set of connecting links (38) interconnecting the shaker shoe means (35) and the further sieve means (28) includes telescoping portions (62) between the shaker shoe means (35) and the pivotal connections with the main frame (12) to permit a relative movement therebetween.

14. A combine harvester (10) according to any one of the claims 4 to 13 when appended to claim 3, characterized in that the shaker shoe means (35) have arcuate sidewalls (41) to correspond to the pivotal movement of the subframe (31); said subframe (31) including fore-and-aft extending seals (43) engageable with said arcuate sidewalls (41) to prevent the loss of threshed grain between the shaker shoe means (35) and the subframe (31).

15. A combine harvester (10) according to any of the preceding claims, characterized in that the shaker shoe means (35) are provided with longitudinally extending seals (44) engageable with sidewalls (46) of the main frame (12) to prevent the loss of threshed grain between the shaker shoe means (35) and said main frame sidewalls (46) during the reciprocating movement of the shaker shoe means (35) and the fore-and-aft leveling movement of said shaker shoe means (35) around the transverse pivot axis (57).

## Revendications

1. Moissonneuse-batteuse (10) équipée d'un châssis principal mobile (12) et d'un mécanisme de nettoyage (20) supporté par celui-ci en communication d'écoulement avec un mécanisme de battage et de séparation (19) pour recevoir du grain battu de ce dernier et pour éliminer dudit grain battu des débris; le mécanisme de nettoyage (20) comportant:
- des moyens cribleurs (35) pourvus de première et seconde extrémités espacées longitudinalement et montées sur le châssis principal (12) d'une manière fonctionnelle pour exécuter, d'une part, un mouvement de va-et-vient dans l'ensemble longitudinal et, d'autre part, un mouvement de pivotement autour d'un axe de pivotement dans l'ensemble transversal (57);
- des moyens d'entraînement (24, 44) pour opérer ledit mouvement de va-et-vient des moyens cribleurs (35) en vue d'acheminer le grain battu d'une manière générale, dans le sens de la longueur de ceux-ci;

— des moyens calibreurs (26) montés sur les moyens cribleurs (35) pour se déplacer conjointement avec ceux-ci et aptes à opérer pour laisser passer à travers eux du grain nettoyé, au fur et à mesure que le grain battu est acheminé sur eux;

— des premiers moyens de réglage de position (64, 60, 70, 90) aptes à intervenir pour opérer un mouvement sélectif des moyens cribleurs (35) autour dudit axe de pivotement dans l'ensemble transversal (57), afin de conserver aux moyens cribleurs (35) une orientation sensiblement horizontale longitudinalement;

— des moyens ventilateurs (29) aptes à opérer pour insuffler de l'air à travers les moyens calibreurs (26), afin de faciliter l'élimination des débris du grain battu; et

— des moyens formant table à grain (22) positionnés pour recevoir le grain battu provenant du mécanisme de battage et de séparation (19) et pour transférer ledit grain battu aux moyens calibreurs (26); caractérisée en ce que

— les moyens formant table à grain (22) sont montés sur les moyens cribleurs (35) en vue d'un ajustement de mise à niveau longitudinal en harmonie avec ceux-ci ainsi qu'avec les moyens calibreurs (26) supportés sur ces derniers;

— les moyens cribleurs (35) sont supportés à pivotement au niveau ou à proximité de leur première extrémité par le châssis principal (12) autour dudit axe de pivotement transversal (57); et

— les premiers moyens de réglage de position (64, 60, 70, 90) relient entre eux le châssis principal (12) et les moyens cribleurs (35), au niveau ou à proximité de la seconde extrémité de ceux-ci, pour opérer ledit ajustement de mise à niveau longitudinal des moyens cribleurs (35) ainsi que des moyens formant table à grain (22) et des moyens calibreurs (26) montés sur ceux-ci autour dudit axe de pivotement (57) positionné au niveau ou à proximité de la première extrémité des moyens cribleurs (35), sans opérer de déplacement des moyens ventilateurs (29) par rapport au châssis principal (12).

2. Moissonneuse-batteuse (10) selon la revendication 1, caractérisée en ce que les premiers moyens de réglage de position (64, 60, 70, 90) comportent un premier inclinomètre (90) monté sur une partie (16) du châssis principal (12) pour détecter l'inclinaison longitudinale de ce dernier, et des premiers moyens d'actionnement (60) associés d'une manière fonctionnelle aux moyens cribleurs (35) et au premier inclinomètre (90) pour opérer un mouvement de pivotement des moyens cribleurs (35) autour dudit axe de pivotement transversal (57) en réponse à la détection par ledit premier inclinomètre (90) d'une variation de l'inclinaison longitudinale du châssis principal (12), afin de maintenir les moyens cribleurs (35) suivant une orientation sensiblement horizontale longitudinalement.

3. Moissonneuse-batteuse (10) selon la revendication 1 ou 2, caractérisée en ce que:

— les moyens formant table à grain (22) et les moyens calibreurs (26) sont montés sur les moyens cribleurs (35) par l'intermédiaire d'un châssis auxiliaire (31); ledit châssis auxiliaire (31) étant supporté sur lesdits moyens cribleurs (35) en vue d'exécuter un mouvement de pivotement autour d'un axe dans l'ensemble longitudinal (53), par rapport auxdits moyens cribleurs (35), et

— des seconds moyens de réglage de position (50, 70, 80) sont associés d'une manière fonctionnelle audit châssis auxiliaire (31) en vue de déplacer d'une manière pivotante ledit châssis auxiliaire (31) portant sur lui les moyens formant table à grain (22) et les moyens calibreurs (26), autour dudit axe dans l'ensemble longitudinal (53), pour permettre de conserver à ceux-ci une orientation sensiblement horizontale dans la direction transversale, indépendamment de l'orientation transversale du châssis principal (12).

4. Moissonneuse-batteuse (10) selon la revendication 3, caractérisée en ce que les seconds moyens de réglage de position (50, 70, 80) comportent:

— un second inclinomètre (80) monté sur une seconde partie (13) du châssis principal (12) pour détecter l'inclinaison transversale de celui-ci, et

— des seconds moyens d'actionnement (50) associés d'une manière fonctionnelle au châssis auxiliaire (31) et au second inclinomètre (80) pour opérer ledit mouvement de pivotement dudit châssis auxiliaire (31) portant sur lui les moyens formant table à grain (22) et les moyens calibreurs (26), autour dudit axe dans l'ensemble longitudinal (53) en réponse à la détection par ledit second inclinomètre (80) d'une variation de l'inclinaison transversale du châssis principal (12), afin de maintenir les moyens formant table à grain (22) et les moyens calibreurs (26) suivant ladite orientation sensiblement horizontale transversalement.

5. Moissonneuse-batteuse (10) selon la revendication 2 ou 4, caractérisée en ce que:

— le ou les inclinomètres (90, 80) comportent des premiers organes de contact (95, 96, resp. 85, 86) et des seconds organes de contact (92, 93, 94, resp. 82, 83, 84) et

— le ou les seconds organes de contact (92, 93, 94, resp. 82, 83, 84) sont accouplés avec les moyens cribleurs (35), respectivement le châssis auxiliaire (31) au moyen d'une pièce de liaison (99, resp. 89); le dispositif étant tel que:

— le ou les premiers organes de contact (95, 96, resp. 85, 86) sont mobiles en réponse à des forces de gravité propres à établir un contact avec le ou les seconds organes de contact (92, 93, 94, resp. 82, 83, 84) correspondants, lorsque le châssis principal (12) est incliné dans la direction longitudinale, respectivement dans la direction transversale, pour ainsi obliger:

a) les premiers moyens d'actionnement (60) à faire pivoter les moyens cribleurs (35) en direction de ladite orientation horizontale longitudinalement, respectivement

b) les seconds moyens d'actionnement (50) à faire pivoter le châssis auxiliaire (31) en direction de ladite orientation horizontale transversalement, et

– le mouvement de pivotement des moyens cribleurs (35), respectivement du châssis auxiliaire (31) oblige ensuite, par l'intermédiaire de la ou des pièces de liaison (99, resp. 89) correspondantes, le ou les seconds organes de contact (92, 93, 94, resp. 82, 83, 84) correspondants à se déplacer dans la même direction que le ou les premiers organes de contact (95, 96, resp. 85, 86) correspondants, pour ainsi interrompre ledit contact entre le ou les premiers et seconds organes de contact (95, 96 et 92, 93, 94, resp. 85, 86 et 82, 83, 84) correspondants, lorsque ladite orientation horizontale est atteinte dans la direction longitudinale, respectivement dans la direction transversale.

6. Moissonneuse-batteuse (10) selon la revendication 5, caractérisée en ce que le ou les seconds organes de contact (92, 93, 94, resp. 82, 83, 84) possèdent des premiers et seconds contacts (93, 83, resp. 94, 84), le dispositif étant tel que les accouplements respectifs entre le ou les premiers organes de contact (95, 96, resp. 85, 86) et les premiers et seconds contacts (93, 83, resp. 94, 84) du ou des seconds organes de contact (92, 93, 94, resp. 82, 83, 84) correspondants opèrent un déplacement des moyens cribleurs (35), respectivement du châssis auxiliaire (31), dans des directions opposées.

7. Moissonneuse-batteuse (10) selon la revendication 5 ou 6, caractérisée en ce que:
– les premiers moyens d'actionnement sont constitués par au moins un cylindre hydraulique (60) qui relie entre eux d'une manière fonctionnelle les moyens cribleurs (35), au niveau ou à proximité de ladite seconde extrémité de ceux-ci, et le châssis principal (12), et
– les premiers moyens de réglage de position (64, 60, 70, 90) comportent, en outre, un système électro-hydraulique (78, 70) pourvu d'une électrovanne (90) reliant entre eux d'une manière fonctionnelle le premier inclinomètre (90) et le ou les cylindres hydrauliques (60); ladite électrovanne (74) étant actionnée au moment où le premier organe de contact (95, 96) du premier inclinomètre (90) vient en contact avec le second organe de contact (92, 93, 94) de celui-ci, lorsque ledit inclinomètre (90) détecte une variation de l'inclinaison longitudinale du châssis principal (12), afin de régler l'écoulement de fluide hydraulique en direction et à partir du ou des cylindres hydrauliques (60).

8. Moissonneuse-batteuse (10) selon l'une quelconque des revendications 5 à 7, lorsqu'elles sont annexées à la revendication 4, caractérisée en ce que:
– les seconds moyens d'actionnement sont constitués par un cylindre hydraulique (50) qui relie entre eux d'une manière fonctionnelle les moyens cribleurs (35) et le châssis auxiliaire (31) et
– les seconds moyens de réglage de position (50, 70, 80) comportent, en outre, un système électro-hydraulique (78, 70) pourvu d'une électrovanne (72) reliant entre eux d'une manière fonctionnelle le second inclinomètre (80) et ledit cylindre hydraulique (50), ladite électrovanne (72) étant actionnée au moment où le premier organe de contact (85, 86) du second inclinomètre (80) vient en contact avec le second organe de contact (92, 93, 94) de celui-ci, lorsque ledit inclinomètre (80) détecte une variation de l'orientation transversale du châssis principal (12), afin de régler l'écoulement de fluide hydraulique en direction et à partir dudit cylindre hydraulique (50).

9. Moissonneuse-batteuse (10) selon l'une quelconque des revendications précédentes, caractérisée en ce que les moyens cribleurs (35) sont supportes d'une manière générale au niveau d'une première extrémité du châssis principal (12) par deux bielles de montage (36); chacune des bielles de montage (36) comportant une extrémité de raccordement reliée aux moyens cribleurs (35), et une extrémité formant pivot (57) espacée de l'extrémité de raccordement et accouplée avec le châssis principal (12), lesdites extrémités formant pivots (57) définissant l'axe de pivotement transversal autour duquel les moyens cribleurs (35) pivotent pendant l'opération de mise à niveau longitudinale, et ces extrémités formant pivots (57) permettant, de surcroît, aux moyens cribleurs (35) d'opérer un mouvement de va-et-vient dans la direction sensiblement longitudinale par rapport au châssis principal (12).

10. Moissonneuse-batteuse (10) selon l'une quelconque des revendications précédentes, caractérisée en ce que:
– les moyens cribleurs (35) sont reliés, d'une manière générale, au niveau de leur seconde extrémité espacée longitudinalement de la première, à deux bielles de raccordement (37); chacune des bielles de raccordement (37) comportant une extrémité de raccordement reliée aux moyens cribleurs (35) et une extrémité formant pivot (59) espacée de l'extrémité de raccordement, tandis que lesdites extrémités formant pivots (59) permettent aux moyens cribleurs (35) d'opérer un mouvement de va-et-vient dans la direction sensiblement longitudinale par rapport au châssis principal (12) et
– les premiers moyens de réglage de position (64, 60) destinés à commander la mise à niveau longitudinale des moyens cribleurs (35), sont reliés auxdites extrémités formant pivots (59) des bielles de raccordement (37) pour engendrer un déplacement dans l'ensemble vertical de ladite seconde extrémité des moyens cribleurs (35) par rapport à l'axe de pivotement transversal (57), afin d'opérer ladite mise à niveau longitudinale des moyens cribleurs (35).

11. Moissonneuse-batteuse (10) selon la revendication 10, caractérisée en ce que les moyens d'entraînement (24, 41) se présentent sous la forme de moyens d'entraînement excentriques (24) reliés à l'extrémité de raccordement de l'une au moins desdites bielles de raccordement (37) pour impartir un mouvement oscillant sensiblement longitudinal aux moyens cribleurs (35), ledit mouvement oscillant ayant une composante verticale.

12. Moissonneuse-batteuse (10) selon la revendication 10 ou 11, caractérisée en ce que chacune des bielles de raccordement (37) est, au niveau de son extrémité formant pivot (59), montée pivotante sur une plaque (64) déplaçable d'une manière générale verticalement dans des organes de guidage (65) montés sur le châssis principal (12), tandis que les premiers moyens de réglage de position (60) qui commandent l'opération de mise à niveau longitudinale sont reliés d'une manière fonctionnelle auxdites plaques (64) en vue de déplacer ces dernières le long desdits organes de guidage (65), afin d'accomplir ladite opération de mise à niveau sensiblement longitudinale des moyens cribleurs (35) autour de l'axe de pivotement transversal (57).

13. Moissonneuse-batteuse (10) selon l'une quelconque des revendications précédentes, dans laquelle des seconds moyens calibreurs (28) sont positionnés sous les premiers moyens calibreurs (26) pour recevoir du grain nettoyé provenant de ceux-ci et pour soumettre ledit grain nettoyé à une seconde opération de nettoyage, lesdits seconds moyens calibreurs (28) étant suspendus au châssis principal (12) par deux jeux de bielles de raccordement (38, 39) dont chacune comporte une extrémité de raccordement reliée aux seconds moyens calibreurs (28) et un pivot relié au châssis principal (12), les bielles de raccordement (38) d'un jeu de bielles de raccordement étant également reliées aux moyens cribleurs (35) sur des côtés opposes des raccordements pivotants de ceux-ci avec le châssis principal (12) pour impartir aux seconds moyens calibreurs (28) un mouvement de va-et-vient sensiblement longitudinal, en opposition au mouvement des premiers moyens calibreurs (26), et caractérisée en ce que: celui des jeux de bielles de raccordement (38) qui relie entre eux les moyens cribleurs (35) et les seconds moyens calibreurs (28) comporte des portions télescopiques (62) entre les moyens cribleurs (35) et les raccordements pivotants avec le châssis principal (12), pour permettre un mouvement relatif entre ceux-ci.

14. Moissonneuse-batteuse (10) selon l'une quelconque des revendications 4 à 13, lorsqu'elles sont annexées à la revendication 3, caractérisée en ce que les moyens cribleurs (35) possèdent des parois latérales courbées en arc (41) pour correspondre au mouvement de pivotement du châssis auxiliaire (31); ledit châssis auxiliaire (31) comportant des joints d'étanchéité (43) qui s'étendent longitudinalement et sont aptes à venir en contact avec lesdites parois latérales courbées en arc (41) pour empêcher la perte de grain battu entre les moyens cribleurs (35) et le châssis auxiliaire (31).

15. Moissonneuse-batteuse (10) selon l'une quelconque des revendications précédentes, caractérisée en ce que les moyens cribleurs (35) sont pourvus de joints d'étanchéité (44) qui s'étendent longitudinalement et sont aptes à venir en contact avec des parois latérales (46) du châssis principal (12) pour empêcher la perte de grain battu entre les moyens cribleurs (35) et lesdites parois latérales de châssis principal (46) pendant le mouvement de va-et-vient des moyens cribleurs (35) et le mouvement de mise à niveau longitudinal desdits moyens cribleurs (35) autour de l'axe de pivotement transversal (57).

## Patentansprüche

1. Mähdrescher (10) mit einem fahrbaren Hauptrahmen (12) und einem hiervon gehalterten Reinigungsmechanismus (20), der in Strömungsverbindung mit einem Dresch- und Trennmechanismus (19) steht, um gedroschenes Korn von diesem aufzunehmen und Spreu von dem gedroschenen Korn zu entfernen, wobei der Reinigungsmechanismus (20) folgende Teile umfasst:
- Rüttelsiebeinrichtungen (35) mit ersten und zweiten mit Längsabstand angeordneten Enden, die betriebsmässig an dem Hauptrahmen (12) einerseits für eine allgemein längsgerichtete Hin- und Herbewegung und andererseits für eine Schwenkbewegung um eine allgemein querverlaufende Schwenkachse (57) befestigt sind,
- Antriebseinrichtungen (24, 44) zur Ausführung der Hin- und Herbewegung der Rüttelsiebeinrichtungen (35) zur Förderung von gedroschenem Korn allgemein in Längsrichtung hiervon,
- Siebeinrichtungen (26), die auf den Rüttelsiebeinrichtungen (35) für eine Bewegung mit diesen befestigt und derart betätigbar sind, dass der Durchgang von gereinigtem Korn durch die Siebeinrichtungen ermöglicht wird, wenn gedroschenes Korn entlang dieser Siebeinrichtungen gefördert wird,
- erste Positionssteuereinrichtungen (64, 60, 70, 90) die derart betätigbar sind, dass sie eine selektive Bewegung der Rüttelsiebeinrichtungen (35) um die allgemein querverlaufende Schwenkachse (57) bewirken, um eine allgemein horizontale Lage der Rüttelsiebeinrichtungen (35) in Längsrichtung aufrechtzuerhalten,
- Gebläseeinrichtungen (29), die zum Blasen von Luft durch die Siebeinrichtungen (26) betätigbar sind, um die Entfernung von Spreu von dem gedroschenen Korn zu erleichtern, und
- Kornwanneneinrichtungen (22), die so angeordnet sind, dass sie gedroschenes Korn von dem Dresch- und Trennmechanismus (19) empfangen und das gedroschene Korn auf die Siebeinrichtungen überführen, dadurch gekennzeichnet, dass
- die Kornwanneneinrichtungen (22) auf den Rüttelsiebeinrichtungen (35) für eine Einstellung auf eine horizontale Lage in Längsrichtung zusammen mit diesen und zusammen mit den daran gehalterten Siebeinrichtungen (26) befestigt sind,
- die Rüttelsiebeinrichtungen (35) schwenkbar an oder benachbart zu einem ihrer Enden an dem Hauptrahmen (12) um die querverlaufende Schwenkachse (57) gehaltert sind, und
- die ersten Positionssteuereinrichtungen (64, 60, 70, 90) den Hauptrahmen (12) mit den Rüttelsiebeinrichtungen (35) an oder benachbart zu deren anderem Ende verbinden, um die Einstellung der Rüttelsiebeinrichtungen (35) zusammen mit den Kornwanneneinrichtungen (22) und den daran befestigten Siebeinrichtungen (26) auf eine horizontale Lage in Längsrichtung um die Schwenkachse (57) zu bewirken, die an oder benachbart zu dem einen Ende der Rüttelsiebeinrichtungen (35) angeordnet ist, ohne dass eine Bewegung der Gebläseeinrichtungen (29) relativ zum Hauptrahmen (12) hervorgerufen wird.

2. Mähdrescher (10) nach Anspruch 1, dadurch gekennzeichnet, dass die ersten Positionssteuereinrichtungen (64, 60, 70, 90) einen ersten Neigungsmesser (90), der an einem Teil (16) des Hauptrahmens (12) befestigt ist, um dessen Neigung in Längsrichtung zu messen, und erste Stellgliedeinrichtungen (60) umfassen, die betriebsmässig mit den Rüttelsiebeinrichtungen (35) und dem ersten Neigungsmesser (90) verbunden sind, um eine Schwenkbewegung der Rüttelsiebeinrichtungen (35) um die querverlaufende Schwenkachse (57) in Abhängigkeit von der Feststellung einer Änderung der Längsneigung des Hauptrahmens (12) durch den ersten Neigungsmesser (90) hervorzurufen, so dass die Rüttelsiebeinrichtungen (35) in einer allgemein horizontalen Lage in Längsrichtung gehalten werden.

3. Mähdrescher (10) nach Anspruch 1 oder 2, dadurch gekennzeichnet, dass
– die Kornwanneneinrichtungen (22) und die Siebeinrichtungen (26) auf den Rüttelsiebeinrichtungen (35) über einen Hilfsrahmen (31) befestigt sind, der auf den Rüttelsiebeinrichtungen (35) für eine Schwenkbewegung um eine allgemein längsverlaufende Achse (53) relativ zu den Rüttelsiebeinrichtungen (35) gehaltert ist, und
– weitere Positionssteuereinrichtungen (50, 70, 80) betriebsmässig mit dem Hilfsrahmen (31) verbunden sind, um eine Schwenkbewegung des Hilfsrahmens (31) mit den daran angeordneten Kornwanneneinrichtungen (22) und Siebeinrichtungen (26) um die allgemein längsverlaufende Achse (53) hervorzurufen, sodass die Aufrechterhaltung einer allgemein horizontalen Lage in Querrichtung unabhängig von der Querlage des Hauptrahmens (12) ermöglicht wird.

4. Mähdrescher (10) nach Anspruch 3, dadurch gekennzeichnet, dass die weiteren Positionssteuereinrichtungen (50, 70, 80) folgende Teile umfassen:
– einen weiteren Neigungsmesser (80), der auf einem weiteren Teil (13) des Hauptrahmens (12) befestigt ist, um dessen Querneigung zu messen, und
– weitere Stellgliedeinrichtungen (50), die betriebsmässig dem Hilfsrahmen (31) und dem weiteren Neigungsmesser (80) zugeordnet sind, um die Schwenkbewegung des Hilfsrahmens (31) mit den daran angeordneten Kornwanneneinrichtungen (22) und den Siebeinrichtungen (26) um die allgemein längsverlaufende Achse (53) in Abhängigkeit von der Feststellung einer Änderung in der Querneigung des Hauptrahmens (12) durch den weiteren Neigungsmesser (80) hervorzurufen, sodass die Kornwanneneinrichtungen (22) und die Siebeinrichtungen (26) in der allgemein horizontalen Lage in Querrichtung gehalten werden.

5. Mähdrescher (10) nach Anspruch 2 oder 4, dadurch gekennzeichnet, dass
– der oder jeder Neigungsmesser (90, 80) erste Kontaktelemente (95, 96 bzw. 85, 86) und zweite Kontaktelemente (92, 93, 94 bzw. 82, 83, 84) aufweist und

– das oder jedes zweite Kontaktelement (92, 93, 94 bzw. 82, 83, 84) mit den Rüttelsiebeinrichtungen (35) bzw. dem Hilfsrahmen (31) über ein Verbindungsglied (99 bzw. 89) gekoppelt ist, wobei die Anordnung derart ist, dass:
– das oder jedes erste Kontaktelement (95, 96 bzw. 85, 86) in Abhängigkeit von Schwerkräften bewegbar ist, um einen Kontakt mit dem oder jedem entsprechenden zweiten Kontaktelement (92, 93, 94 bzw. 82, 83, 84) herzustellen, wenn der Hauptrahmen in Längsrichtung bzw. in Querrichtung geneigt ist, um auf diese Weise zu bewirken, dass:
  a) die ersten Stellgliedeinrichtungen (60) die Rüttelsiebeinrichtungen (35) in Richtung auf die horizontale Lage in Längsrichtung verschwenken, bzw.
  b) die weiteren Stellgliedeinrichtungen (50) den Hilfsrahmen (31) in Richtung auf die horizontale Lage in Querrichtung verschwenken, und
– die Schwenkbewegung der Rüttelsiebeinrichtungen (35) bzw. des Hilfsrahmens (31) nachfolgend über das oder jedes entsprechende Verbindungsglied (99 bzw. 89) eine Bewegung des oder jedes entsprechenden zweiten Kontaktelementes (92, 93, 94 bzw. 82, 83, 84) in der gleichen Richtung wie das oder jedes entsprechende erste Kontaktelement (95, 96 bzw. 85, 86) hervorruft, um den Kontakt zwischen dem oder jedem ersten und zweiten entsprechenden Kontaktelement (95, 96 und 92, 93, 94 bzw. 85, 86 und 82, 83, 84) zu unterbrechen, wenn die horizontale Lage in der Längsrichtung bzw. in der Querrichtung erreicht ist.

6. Mähdrescher (10) nach Anspruch 5, dadurch gekennzeichnet, dass das oder jedes zweite Kontaktelement (92, 93, 94 bzw. 82, 83, 84) erste und zweite Kontakte (93, 83 bzw. 94, 84) aufweist und die Anordnung derart ist, dass die jeweiligen Berührungen zwischen dem oder jedem ersten Kontaktelement (95, 96 bzw. 85, 86) und den ersten und zweiten Kontakten (93, 83 bzw. 94, 84) des oder jedes entsprechenden zweiten Kontaktelementes (92, 93, 94 bzw. 82, 83, 84) eine Bewegung der Rüttelsiebeinrichtungen (35) bzw. des Hilfsrahmens (31) in entgegengesetzten Richtungen bewirken.

7. Mähdrescher (10) nach Anspruch 5 oder 6, dadurch gekennzeichnet, dass
– die ersten Stellgliedeinrichtungen durch zumindestens einen Hydraulikzylinder (60) gebildet sind, der die Rüttelsiebeinrichtungen (35) an oder benachbart zu deren anderem Ende und den Hauptrahmen (12) miteinander verbindet, und
– die ersten Positionssteuereinrichtungen (64, 60, 70, 90) weiterhin ein elektro-hydraulisches System (78, 70) umfassen, das ein Magnetventil (74) aufweist, das betriebsmässig den ersten Neigungsmesser (90) und den zumindestens einen Hydraulikzylinder (60) miteinander verbindet, wobei das Magnetventil (74) betätigt wird, wenn das erste Kontaktelement (95, 96) des ersten Neigungsmessers (90) mit dessen zweitem Kontaktelement (92, 93, 94) in Kontakt kommt, wenn der Neigungsmesser (90) eine Änderung der Längsneigung des Hauptrahmens (12) feststellt, um die Strömung einer Hydraulikflüssigkeit zu oder von dem zumindestens einen Hydraulikzylinder (60) zu steuern.

8. Mähdrescher (10) nach einem der Ansprüche 5 bis 7 unter Rückbeziehung auf Anspruch 4, dadurch gekennzeichnet, dass

– die weiteren Stellgliedeinrichtungen durch einen Hydraulikzylinder (50) gebildet sind, der die Rüttelsiebeinrichtungen (35) und den Hilfsrahmen (31) betriebsmässig miteinander verbindet, und

– die weiteren Positionssteuereinrichtungen (50, 70, 80) weiterhin ein elektro-hydraulisches System (78, 70) mit einem Magnetventil (72) umfassen, das den zweiten Neigungsmesser (80) und den Hydraulikzylinder (50) betriebsmässig miteinander verbindet, wobei das Magnetventil (72) betätigt wird, wenn das erste Kontaktelement (85, 86) des zweiten Neigungsmessers (80) mit dessen zweiten Kontaktelement (92, 93, 94) in Kontakt kommt, wenn der Neigungsmesser (80) eine Änderung der Querneigung des Hauptrahmens (12) feststellt, um die Stömung von Hydraulikflüssigkeit zu und von dem Hydraulikzylinder (50) zu steuern.

9. Mähdrescher (10) nach einem der vorhergehenden Ansprüche, dadurch gekennzeichnet, dass die Rüttelsiebeinrichtungen (35) allgemein an einem Ende an dem Hauptrahmen (12) über zwei Befestigungsglieder (36) gehaltert sind, dass jedes Befestigungsglied (36) ein mit den Rüttelsiebeinrichtungen (35) verbundenes Verbindungsende und ein mit Abstand von dem Verbindungsende angeordnetes Schwenkende (57) aufweist, das mit dem Hauptrahmen (12) gekoppelt ist, dass die Schwenkenden (57) die querverlaufende Schwenkachse bilden, um die die Rüttelsiebeinrichtungen (35) während der Ausrichtung auf die horizontale Lage in Längsrichtung verschwenkt werden, und dass die Schwenkenden (57) weiterhin eine Hin- und Herbewegung der Rüttelsiebeinrichtungen (35) entlang der allgemein längsverlaufenden Richtung gegenüber dem Hauptrahmen (12) ermöglichen.

10. Mähdrescher (10) nach einem der vorhergehenden Ansprüche, dadurch gekennzeichnet, dass

– die Rüttelsiebeinrichtungen (35) allgemein an dem anderen mit Längsabstand von dem einen Ende angeordneten Ende mit zwei Verbindungsgliedern (37) verbunden sind, wobei jedes Verbindungsglied (37) ein mit den Rüttelsiebeinrichtungen (35) verbundenes Verbindungsende und ein mit Abstand von dem Verbindungsende angeordnetes Schwenkende (59) aufweist, und wobei die Schwenkenden (59) die Hin- und Herbewegung der Rüttelsiebeinrichtungen (35) entlang der allgemein längsverlaufenden Richtung gegenüber dem Hauptrahmen (12) ermöglichen, und

– die ersten Positionssteuereinrichtungen (64, 60) zur Steuerung der Ausrichtung der Rüttelsiebeinrichtungen (35) auf die horizontale Lage in Längsrichtung mit den Schwenkenden (59) der Verbindungsglieder (37) verbunden sind, um eine allgemein vertikale Bewegung des anderen Endes der Rüttelsiebeinrichtungen (35) gegenüber der querverlaufenden Schwenkachse (57) hervorzurufen, sodass die Ausrichtung der Rüttelsiebeinrichtungen (35) auf die horizontale Lage in Längsrichtung bewirkt wird.

11. Mähdrescher (10) nach Anspruch 10, dadurch gekennzeichnet, dass die Antriebeinrichtungen (24, 41) die Form von exzentrischen Antriebseinrichtungen (24) aufweisen, die mit dem Verbindungsende von zumindestens einem der Verbindungsglieder (37) verbunden sind, um eine allgemein in Längsrichtung verlaufende Rüttelbewegung auf die Rüttelsiebeinrichtungen (35) auszuüben, wobei die Rüttelbewegung eine Vertikalkomponente aufweist.

12. Mähdrescher (10) nach Anspruch 10 oder 11, dadurch gekennzeichnet, dass jedes Verbindungsglied (37) an seinem Schwenkende (59) schwenkbar mit einer Platte (64) verbunden ist, die allgemein vertikal in Führungsteilen (65) beweglich ist, die auf dem Hauptrahmen (12) befestigt sind, und dass die ersten, die Ausrichtbetätigung in Längsrichtung steuernden Steuereinrichtungen (60) betriebsmässig mit den Platten (64) verbunden sind, um diese Platten (64) entlang der Führungsteile (85) zu bewegen, so dass die Ausrichtbewegung der Rüttelsiebeinrichtungen (35) auf die allgemein horizontale Lage in Längsrichtung um die querverlaufende Schwenkachse (57) durchgeführt wird.

13. Mähdrescher (10) nach einem der vorhergehenden Ansprüche, bei dem weitere Siebeinrichtungen (28) unterhalb der ersten Siebeinrichtungen (26) angeordnet sind, um von diesen gereinigtes Korn zu empfangen und dieses gereinigte Korn einer weiteren Reinigungswirkung zu unterwerfen, wobei die weiteren Siebeinrichtungen (28) an dem Hauptrahmen (12) mit Hilfe von zwei Sätzen von Verbindungsgliedern (38, 39) aufgehängt sind und jedes der Verbindungsglieder (38, 39) ein mit dem weiteren Siebeinrichtungen (38) verbundenes Verbindungsende und ein Schwenkende aufweist, das mit dem Hauptrahmen (12) verbunden ist, wobei weiterhin die Verbindungsglieder (38) eines Satzes von Verbindungsgliedern weiterhin mit den Rüttelsiebeinrichtungen (35) an den gegenüberliegenden Seiten ihrer Schwenkverbindungen mit dem Hauptrahmen (12) verbunden sind, um eine allgemein in Längsrichtung verlaufende Hin- und Herbewegung der weiteren Siebeinrichtungen (28) entgegengesetzt zur Bewegung der ersten Siebeinrichtungen (26) hervorzurufen, dadurch gekennzeichnet, dass der eine Satz von Verbindungsgliedern (38), der die Rüttelsiebeinrichtungen (35) und die weiteren Siebeinrichtungen (28) miteinander verbindet, Teleskopabschnitte (62) zwischen den Rüttelsiebeinrichtungen (35) und den Schwenkverbindungen mit dem Hauptrahmen (12) einschliesst, um eine Relativbewegung zwischen diesen Teilen zu ermöglichen.

14. Mähdrescher (10) nach einem der Ansprüche 4 bis 13 unter Rückbeziehung auf Anspruch 3, dadurch gekennzeichnet, dass die Rüttelsiebeinrichtungen (35) bogenförmige Seitenwände (41) aufweisen, die der Schwenkbewegung des Hilfsrahmens (31) entsprechen, und dass der Hilfsrahmen (31) sich in Längsrichtung erstreckende Dichtungen (43) einschliesst, die mit den bogenförmigen Seitenwänden in Eingriff bringbar sind, um den Verlust von gedroschenem Korn zwischen den Rüttelsiebeinrichtungen (35) und dem Hilfrahmen (31) zu verhindern.

15. Mähdrescher (10) nach einem der vorhergehenden Ansprüche, dadurch gekennzeichnet, dass die Rüttelsiebeinrichtungen (35) mit sich in Längsrichtung erstreckenden Dichtungen (44) versehen sind, die mit Seitenwänden (46) des Hauptrahmens in Eingriff bringbar sind, um den Verlust von gedroschenem Korn zwischen den Rüttelsiebeinrichtungen (35) und den Seitenwänden (46) des Hauptrahmens während der Hin- und Herbewegung der Rüttelsiebeinrichtungen (35) und der Ausrichtbewegung der Rüttelsiebeinrichtungen (35) auf die horizontale Lage in Längsrichtung um die querverlaufende Schwenkachse (57) zu verhindern.

Fig. I

Fig. 2

*Fig. 3*

Fig. 4